# EUROPÄISCHE PATENTSCHRIFT

(11) **EP 0 799 802 B1**
(45) Veröffentlichungstag und Bekanntmachung des Hinweises auf die Patenterteilung: **26.01.2000**
(21) Anmeldenummer: 96105524.1
(22) Anmeldetag: 06.04.1996
(51) Int. Cl.: C03B 5/027, H05B 3/03

(54) **Modularer Halter für eine gekühlte Glasschmelz-Tauchelektrode**
Holder for a cooled glass-melting electrode
Support pour une électrode refroidie pour la fusion de verre

(43) Veröffentlichungstag der Anmeldung: 08.10.1997
(73) Patentinhaber: Walther-Glas GmbH, 33014 Bad Driburg (DE)
(72) Erfinder: Rochell, Winfried, 33034 Brakel (DE); Forster, Kurt, 33014 Bad Driburg/Dringenberg (DE)
(74) Vertreter: Habbel, Hans-Georg, Dipl.-Ing.

(56) Entgegenhaltungen:
- US-A- 5 283 803

## Beschreibung

Die Erfindung betrifft einen Halter nach dem Oberbegriff des Anspruches 1.

Derartige Halter sind aus der US-PS 5 283 803 bekannt. Sie dienen zur Halterung von Elektroden, die von oben in die Glasschmelze eines Glasschmelzofens eintauchen. Die bekannte Halterung weist einen Stützring auf, der aus mehreren Einzelelementen zusammengeschweißt ist, um den Aufnahmeraum für das Kühlmedium zu bilden. Die Temperaturbeanspruchung eines derartigen Stützringes, insbesondere eine Temperaturwechselbeanspruchung durch Eintauchen und Herausnahme der Elektrode aus der Schmelze führt bei der bekannten Halterung zu derartigen Temperaturwechseln, daß Risse im Bereich dieser Schweißkonstruktion nicht auszuschließen sind.

Unter dem Einfluß der über der Glasschmelze im Wannenoberbau herrschenden Atmosphäre und aufgrund der dortigen hohen Temperaturen besteht das Problem, daß die Elektrode im Gewindebereich an dem Kupplungsstück festbackt, so daß die Elektrode nur unter erheblichem Arbeits- und Zeitaufwand aus den bekannten Halterungen gelöst werden kann, wenn sie beispielsweise aufgrund von Abbrand ausgewechselt werden muß.

Aufgrund der hohen aufzuwendenden Kräfte kann dabei der Halter beschädigt werden. Da die Zuführungen für das Kühlmedium in den Stützring mit dem Stützring verschweißt sind, ist eine Reparatur der Halterung, insbesondere wenn der Stützring betroffen ist, zeitaufwendig oder kostenaufwendig, wenn komplette Bauteile, die sowohl die Wasserzuführung als auch den Stützring umfassen, ausgetauscht werden müssen.

Der Erfindung liegt die Aufgabe zugrunde, einen gattungsgemäßen Halter dahingehend zu verbessern, daß die Beschädigungsgefahr durch den Elektrodenwechsel herabgesetzt wird und bei Beschädigung des Halters eine schnelle und preiswerte Reparatur möglich ist.

Diese der Erfindung zugrundeliegende Aufgabe wird durch die Ausgestaltung gemäß dem kennzeichnenden Teil des Anspruches 1 gelöst.

Die Erfindung schlägt mit anderen Worten vor, den Halter nicht als komplexes Bauteil auszubilden, sondern als modular aufgebautes Bauteil mit mehreren voneinander lösbaren Baugruppen. Auf diese Weise kann preisgünstig jeweils ausschließlich das Bauteil entfernt und ggf. repariert oder aber ausgetauscht werden, welches durch die Beschädigung betroffen ist.

Dabei schlägt die Erfindung insbesondere vor, ein Kupplungsstück zu verwenden, welches ein Außengewinde aufweist, auf welches die Elektrode aufgeschraubt wird. Dabei soll das Kupplungsstück, welches die Elektrode mit der elektrischen Zuleitung verbindet, gekühlt sein, beispielsweise in den Kühlkreislauf der Elektrode eingebunden sein, so daß auch das Gewinde gekühlt wird.

Bei den bekannten Elektrodenhaltern, die ein Innengewinde am Halter und ein Außengewinde an der Elektrode vorsehen, ist der Abstand des Gewindes zum Kühlmedium, welches in der Mitte der Elektrode geführt ist, vergleichsweise groß. Bei der erfindungsgemäßen Anordnung eines Außengewindes am Kupplungsstück befindet sich das Gewinde in einem radialen Abstand vom Kühlmedium, der erheblich geringer ist als der Radius der Elektrode selbst, so daß eine wesentlich bessere Kühlung des Gewindes die Folge ist. Durch die niedrigeren Temperaturen im Gewindebereich wird ein "Festbacken" der Elektrode vermieden.

Weiterhin ist erfindungsgemäß ein Verbindungsgehäuse vorgesehen, welches den Bereich innerhalb eines Gehäuses aufnimmt, in dem die elektrische Zuleitung an das Kupplungsstück anschließt. Die Atmosphäre im Wannenoberbau ist in Verbindung mit den dort herrschenden Temperaturen aggressiv und führt bei bekannten Elektrodenhaltern zu einer schlechten Lösbarkeit der einzelnen Komponenten.

Dadurch, daß diese Komponenten innerhalb des Verbindungsgehäuses angeordnet sind, wird mittels des Gehäuses einerseits eine Temperaturisolierung zwischen dem gekühlten Kupplungsstück einerseits und der Wannenatmosphäre andererseits geschaffen und andererseits wird ein Zutritt der Atmosphäre aus dem Wannenoberbau in das Verbindungsgehäuse erschwert oder verhindert. So wird eine leichte Lösbarkeit der einzelnen Komponenten voneinander sichergestellt.

Schließlich schlägt die Erfindung einen Stützring vor, der die Elektrode von außen umfaßt in dem Bereich, in dem die Elektrode auf das Kupplungsstück aufgeschraubt ist. Auf diese Weise wird die Elektrode durch den Stützring zentriert und zusätzlich mechanisch gehalten. Dieser Stützring kann mit dem Kupplungsstück oder mit dem Verbindungsgehäuse verbunden sein, wobei zugunsten einer Reparaturfreundlichkeit diese Verbindung lösbar ist.

Weitere vorteilhafte Ausgestaltungen der Erfindung sind den Unteransprüchen entnehmbar.

Ein Ausführungsbeispiel der Erfindung wird anhand der Zeichnungen im folgenden näher erläutert. Dabei zeigt
- Fig. 1: einen Längsschnitt durch einen erfindungsgemäßen Elektrodenhalter sowie die darin angeordnete Elektrode und
- Fig. 2: einen Elektrodenhalter nach dem Stand der Technik.

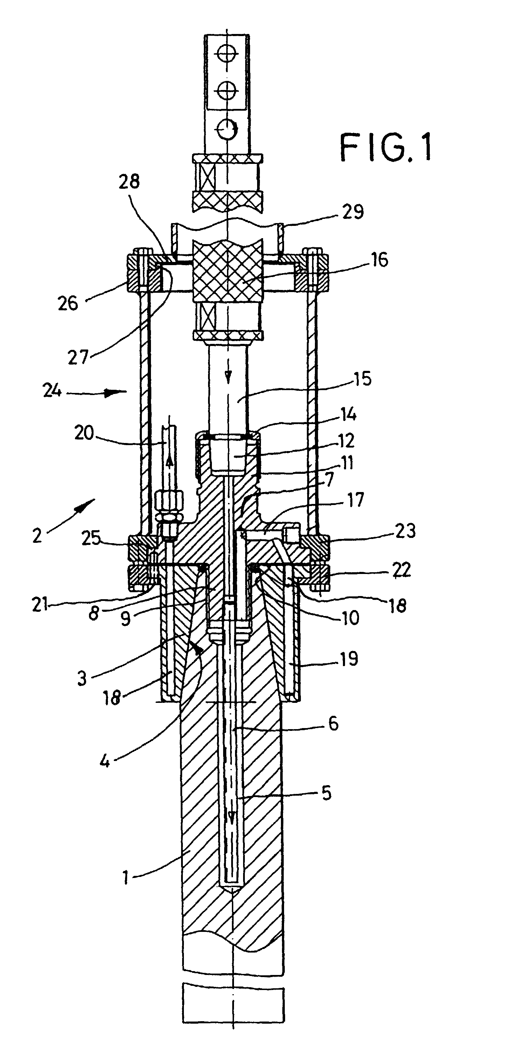

In Fig. 1 ist mit 1 eine Elektrode bezeichnet, die als Tauchelektrode von oben in eine Glasschmelze eingetaucht werden kann. Die Elektrode 1 ist in einem allgemein mit 2 bezeichneten Halter gehaltert, wobei die Elektrode 1 innerhalb eines Stützringes 3 zentriert ist, der einen dicht anliegenden Innenkonus 4 für das obere konische Ende der Elektrode 1 aufweist. Die Elektrode 1 ist innen gekühlt und weist hierzu eine Sackbohrung 5 auf, in welche ein Kühl rohr 6 ragt.

Der Stützring 3 bewirkt eine Zentrierung, eine Abdichtung und zusätzliche mechanische Stütze für die Elektrode 1.

Die eigentliche Halterung der Elektrode 1 erfolgt über ein Kupplungsstück 7, welches einen Stutzen 8 mit einem Außengewinde 9 aufweist, wobei die Elektrode 1 ein mit dem Außengewinde 9 zusammenwirkendes Innengewinde aufweist und auf den Stutzen 8 aufgeschraubt ist. Zwischen dem Stützring 3 und dem Kupplungsstück 7 ist ein Dichtring 10 angeordnet, der temperaturbeständig ausgebildet ist.

Das Kupplungsstück 7 weist einen oberen Anschlußstutzen 11 auf, an den über einen Dichtungskonus 12 und eine überwurfmutter 14 ein wassergekühltes Stromkabel 15 anschließt. Das Stromkabel 15 weist eine temperaturbeständige Schutzhülle 16 auf.

Das Kühlwasser wird zunächst durch das Stromkabel 15 geführt, dann durch das Kupplungsstück 7, durch dessen unteren Stutzen 8 und anschließend durch das Kühl rohr 6 in die Sackbohrung 5 der Kühlelektrode 1. Am unteren Ende dieser Sackbohrung 5 tritt das Kühlwasser aus dem Kühlwasservorlauf aus und strömt seitlich am Kühlrohr 6 entlang nach oben durch die Sackbohrung 5 als Rücklaufwasser. Es tritt in den Stutzen 8 ein, wird dort durch eine Abzweigleitung 17 radial nach außen geführt und anschließend nach unten in den Stützring 3.

Der Stützring 3 ist einstückig aus einem einzigen Materialblock hergestellt, so daß eine Rißbildung an Schweißnähten od. dgl. auch unter Temperaturwechselbelastungen vermieden wird. Der Stützring 3 weist einen mäanderförmig verlaufenden Kanal 18 für das Kühlmittel auf. Bei der einstückigen Ausbildung des Stützringes 3 kann der Kanal 18 dadurch gebildet sein, daß eine Ringnut in den Stützring 3 eingebracht wird, die sich nahezu bis zu dessen unterem Ende wie aus Fig. 1 ersichtlich erstreckt. Anschließend werden in diese Ringnut im Abstand voneinander verteilt mehrere Trennstäbe 19 eingesetzt.

Wenn das Kühlmittel durch den Stützring 3 geführt ist, kann es durch eine entsprechende Bohrung innerhalb des Kupplungsstückes 7 in ein Wasserrücklaufrohr 20 eintreten, welches lösbar mittels eines Schraubanschlusses am Kupplungsstück 7 befestigt ist.

Um den Wasserfluß vom Kupplungsstück 7 in den Stützring 3 und umgekehrt sicherzustellen, ist eine Positionierbohrung 21 vorgesehen, die die exakte Ausrichtung von Stützring 3 und Kupplungsstück 7 auf einfache Weise ermöglicht. Dies kann entweder durch optische Kontrolle sichergestellt werden oder dadurch, daß in die Positionierbohrung ein Stift an einem der beiden Bauteile eingepaßt ist.

Eine feste Verbindung zwischen dem Stützring 3 und dem Kupplungsstück 7 wird durch eine Flanschverbindung ermöglicht, wobei ein Stützringflansch 22 sich am Stützring 3 abstützt und mit einem ersten Gehäuseflansch 23 eines Verbindungsgehäuses 24 verschraubt ist. Dieser erste Gehäuseflansch 23 stützt sich an einem umlaufenden Vorsprung 25 des Kupplungsstückes 7 ab, so daß durch Festlegung der beiden Flansche 22 und 23 eine feste und flüssigkeitsdichte, jedoch lösbare Verbindung zwischen Stützring 3 und Kupplungsstück 7 möglich ist.

Das Verbindungsgehäuse 24 weist einen zweiten Gehäuseflansch 26 auf, wobei die beiden Gehäuseflansche 23 und 26 fest mit dem Verbindungsgehäuse 24 verschweißt sind. Der zweite Gehäuseflansch 26 ist als Ringflansch ausgebildet und ermöglicht das Einführen des Stromkabels 15 mitsamt seiner Schutzhülle 16 in das Verbindungsgehäuse 24. Weiterhin weist der zweite Gehäuseflansch 26 einen Zentrierkragen 27 auf.

Der Zentrierkragen 27 dient dazu, eine Abschlußplatte 28 zu zentrieren, die an das Ende eines Halterohres 29 geschweißt ist. Das Halterohr 29 dient zum einen zur geschützten Aufnahme des Stromkabels 15 und zum anderen dazu, die Elektrode 1 mit dem gesamten Halter 2 an einer Einstell- und Haltevorrichtung festzulegen, die eine höhen- und winkelverstellbare Befestigung der Elektrode ermöglicht.

Insgesamt wird so eine gasdichte Ausbildung des Verbindungsgehäuses geschaffen, so daß das Kupplungsstück 7 und das Ende des Stromkabels 15, welches an das Kupplungsstück 7 anschließt, insgesamt gasdicht vom Verbindungsgehäuse 24 aufgenommen sind. Die Schutzwirkung des Verbindungsgehäuses 24 gegenüber der äußeren Atmosphäre wird auf diese Weise besonders gut sichergestellt.

Durch die abdichtende Bauweise des Verbindungsgehäuses 24 und den gasdichten Anschluß des Halterohres 29 wird insgesamt der Anschluß des Stromkabels 15 an das Kupplungsstück 7 von der äußeren Atmosphäre, also von der aggressiven Atmosphäre im Oberraum der Schmelzwanne isoliert. Zudem kann durch die Wasserkühlung innerhalb des Verbindungsgehäuses 24 eine niedrigere Temperatur als außerhalb des Verbindungsgehäuses 24 aufrechterhalten werden, so daß insgesamt eine leichte Demontage der einzelnen Bauteile innerhalb des Verbindungsgehäuses 24 im Bedarfsfall sichergestellt werden kann. Zudem wird die Gefahr erheblich reduziert, daß Übergangswiderstände zwischen dem Stromkabel 15, dem Kupplungsstück 7 sowie der Elektrode 1 auftreten, da deren Oberflächen nicht der Atmosphäre des Wannenoberraumes ausgesetzt sind und daher eine Korrosion, Oxidation oder Verzunderung dieser Oberflächen ausgeschlossen ist.

Alternativ zu einer derart gasdichten Ausbildung des Verbindungsgehäuses 24 kann ein Schutz der vom Verbindungsgehäuse 24 aufgenommenen Bauteile vor der Umgebungsatmosphäre dadurch erzielt werden, daß das Verbindungsgehäuse 24 an eine Reinluftspülung angeschlossen ist, so daß auch bei nicht gasdichter Ausbildung des Verbindungsgehäuses 24 der Eintritt von Umgebungsatmosphäre in das Gehäuse verhindert werden kann.

In der Zeichnung nicht dargestellt ist ein Temperatursensor, der beispielsweise im Bereich des Kupplungsstückes 7 oder des Stützringes 3 angeordnet sein kann und der bei Überschreitung einer vorgegebenen Temperatur die Elektrode abschalten kann, um weitere Schäden an der Elektrode oder am Halter 2 zu verhindern. Der Temperatursensor kann entweder unmittelbar die Elektrodentemperatur messen oder die Temperatur des Elektrodenhalters. Wenn der Temperatursensor beispielsweise im Kupplungsstück 7 angeordnet ist oder im Stützring 3, ergibt sich bei mangelhafter Kühlleistung aufgrund der guten thermischen Anbindung an die Elektrode 1 in jedem Fall die Möglichkeit einer aussagekräftigen Messung, um eine Überhitzung der gesamten Anordnung frühzeitig zu erkennen.

Weiterhin kann ein Wasserwächter vorgesehen sein, der die Strömung des Kühlmittelkreislaufes überwacht und der ebenfalls zum Abschalten der Elektrode führen kann, ggf. bevor eine als kritisch erfaßte Temperatur durch den Temperatursensor erfaßt und gemeldet werden kann.

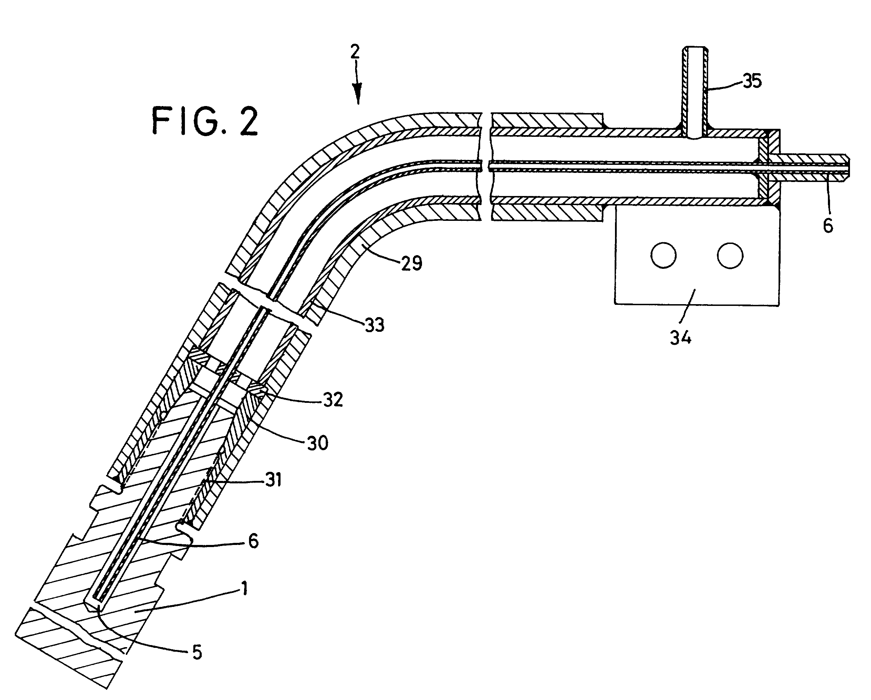

In Fig. 2 ist demgegenüber eine Elektrode und ein Elektrodenhalter nach dem Stand der Technik dargestellt. Die Elektrode 1 ist ebenfalls innengekühlt, weist also eine Sackbohrung 5 und ein Kühl rohr 6 auf. Der Elektrodenhalter 2 umfaßt ein Halterohr 29, in dem ein Aufnahmeblock 30 und ein röhrenförmiger Stromleiter 33 angeordnet sind, wobei der Stromleiter 33 eine Anschlußlasche 34 für die elektrische Energieversorgung aufweist. Der Aufnahmeblock 30 stellt sowohl die elektrische Kontaktierung der Elektrode 1 sicher als auch deren mechanische Halterung, wobei zu diesem Zweck der Aufnahmeblock 30 ein Innengewinde 31 aufweist, in welches die Elektrode 1 eingeschraubt wird.

Der Kühlmittelfluß erfolgt bei diesem Halter 2 bis an das untere Ende der Sackbohrung 5 als Vorlauf durch das Kühlrohr 6 und von dort im Rücklauf durch die Elektrode 1 nach oben, von dort durch den Aufnahmeblock 30 und eine Dichtungsscheibe 32 ins Innere des Stromleiters 33 bis zu einem Anschlußstutzen 35. Eine Kühlung im Bereich des Gewindes 31 erfolgt lediglich durch die Kühlung innerhalb der Sackbohrung 5 der Elektrode 1.

Dadurch, daß der Elektrodenhalter 2 gemäß dem Stand der Technik in Fig. 2 nicht modular aufgebaut ist, sondern daß einzelne Bauteile eine Vielzahl von Funktionen übernehmen und daß die einzelnen Bauteile fest miteinander verbunden, beispielsweise verschweißt sind, führt die Beschädigung eines der Bauteile notwendigerweise zum Austausch des gesamten Halters 2.

Zudem ist die Anordnung eines Temperatursensors in diesem Elektrodenhalter nicht oder nur unter erheblichen Schwierigkeiten möglich.

Eine Längenänderung des fest eingebauten Kühlrohres 6 ist ebenfalls nicht beschädigungsfrei möglich.

Das Kühlrohr 6 ist demgegenüber beim Anmeldungsgegenstand nach Fig. 1 lösbar am Kupplungsstück 7 angebracht, und zwar indem es mit dem unteren Stutzen 8 verschraubt ist. Diese auswechselbare Anordnung des Kühlrohres 6 ermöglicht eine an die in jeder Schmelzwanne individuell herrschenden Betriebsverhältnisse anpaßbare Kühlung der Elektrode 1: Die Sackbohrung 5 der Elektrode kann beispielsweise vertieft werden und dementsprechend kann ein längeres Kühl rohr 6 Verwendung finden, um den Kühlwasservorlauf in tiefere Bereiche der Elektrode 1 zu bringen und dementsprechend einen größeren Abschnitt der Elektrode 1 zu kühlen.

Umgekehrt kann durch Verwendung eines kürzeren Kühlrohres 6 und durch Einbringen eines Stopfens in den unteren Bereich der Sackbohrung 5 der zu kühlende Bereich der Elektrode 1 verringert werden, so daß insgesamt eine flexible Anpassung der Kühlzone an die jeweils vorliegenden Betriebsverhältnisse möglich ist. Diese werden durch die Füllhöhe der Schmelzwanne, die Einbauhöhe des Elektrodenhalters, die Neigung, mit der die Elektrode in die Schmelze eintaucht sowie durch die Ausgestaltung des oberen Bereiches der Elektrode beeinflußt.

In jedem Fall ist einerseits eine ausreichende Kühlung der Elektrode 1 möglich, um vorzeitigen Verschleiß zu verhindern, andererseits jedoch eine Begrenzung der Kühlung auf das notwendige Maß, so daß die durch die Kühlung hervorgerufene Verlustleistung so gering wie nötig gehalten werden kann.

## Patentansprüche

1. Halter (2) für eine gekühlte Glasschmelz-Tauchelektrode (1), mit einem Kupplungsstück (7) welches durch Kühlmedium kühlbar ist und ein Außengewinde (9) zur Aufnahme der Elektrode (1) aufweist sowie Anschlußmittel für die elektrische Zuleitung (16), und mit einem Stützring (3), der ebenfalls durch Kühlmedium kühlbar ist und der die Elektrode umgreift, dadurch gekennzeichnet, daß der Stützring (3) die Elektrode in dem Bereich umgreift, in dem diese auf das Kupplungsstück (7) aufgeschraubt ist, und daß der Stützring (3) einstückig aus einem einzigen Materialblock hergestellt ist, und daß der Stützring (3) an dem Kupplungsstück (7) und/oder an einem Verbindungsgehäuse (24) lösbar befestigt ist, wobei das Verbindungsgehäuse (24) das Kupplungsstück (7) aufnimmt sowie das Ende einer elektrischen Zuleitung, die mit dem Kupplungsstück (7) verbunden ist.

2. Halter nach Anspruch 1, gekennzeichnet durch ein Halterohr (29) zur Befestigung des gesamten Halters (2) an einer Einstell- und Haltevorrichtung, wobei das Halterohr (29) an dem Verbindungsgehäuse (24) befestigt ist.

3. Halter nach Anspruch 1 oder 2, dadurch gekennzeichnet, daß der Stützring (3) eine als Innenkonus (4) ausgebildete Aufnahme für die Elektrode (1) aufweist.

4. Halter nach einem der vorhergehenden Ansprüche, dadurch gekennzeichnet, daß die elektrische Zuleitung durch ein wassergekühltes Stromkabel (15) ausgebildet ist.

5. Halter nach einem der vorhergehenden Ansprüche, dadurch gekennzeichnet, daß der Stützring (3) einen Kühlmittelkanal (18) aufweist und in den Kühlmittelkreislauf eingebunden ist.

6. Halter nach einem der vorhergehenden Ansprüche, dadurch gekennzeichnet, daß das Verbindungsgehäuse (24) gasdicht ausgebildet ist.

7. Halter nach einem der Ansprüche 1 bis 5, dadurch gekennzeichnet, daß das Verbindungsgehäuse (24) das Kupplungsstück (7) und das Ende der elektrischen Zuleitung, welches mit dem Kupplungsstück (7) verbunden ist, gasdicht aufnimmt.

8. Halter nach einem der Ansprüche 1 bis 5, dadurch gekennzeichnet, daß das Verbindungsgehäuse (24) Ein- und Auslaßöffnungen für eine Belüftung mit Reinluft aufweist.

9. Halter nach einem der vorhergehenden Ansprüche, dadurch gekennzeichnet, daß ein Temperatursensor zur Überwachung der Elektrodentemperatur vorgesehen ist.

10. Halter nach einem der vorhergehenden Ansprüche, dadurch gekennzeichnet, daß das Kühlrohr (6) lösbar am Elektrodenhalter (2) befestigt, beispielsweise an das Kupplungsstück (7) angeschraubt, ist.

## Claims

1. Holder (2) for a cooled glass-melting dipped electrode (1), having a coupling piece (7) which can be cooled by cooling medium and has an external screwthread (9) for receiving the electrode (1) as well as connection means for the electrical supply conductor (16), and having a supporting ring (3), which can likewise be cooled by cooling medium and engages around the electrode, characterized in that the supporting ring (3) engages around the electrode in that area in which the electrode is screwed onto the coupling piece (7), and in that the supporting ring (3) is produced as a single piece from a single block of material, and in that the supporting ring (3) is releasably attached to the coupling piece (7) and/or to a connecting casing (24), the connecting casing (24) accommodating the coupling piece (7) and the end of an electrical supply conductor which is connected to the coupling piece (7).

2. Holder according to Claim 1, characterized by a holding tube (29) for attaching the complete holder (2) to an adjustment and holding device, the holding tube (29) being attached to the connecting casing (24).

3. Holder according to Claim 1 or 2, characterized in that the supporting ring (3) has a receptacle, which is designed as an internal cone (4), for the electrode (1).

4. Holder according to one of the preceding claims, characterized in that the electrical supply conductor is formed by a water-cooled power cable (15).

5. Holder according to one of the preceding claims, characterized in that the supporting ring (3) has a coolant duct (18) and is integrated into the coolant circuit.

6. Holder according to one of the preceding claims, characterized in that the connecting casing (24) is of gastight design.

7. Holder according to one of Claims 1 to 5, characterized in that the connecting casing (24) accommodates, in a gastight manner, the coupling piece (7) and that end of the electrical supply conductor which is connected to the coupling piece (7).

8. Holder according to one of Claims 1 to 5, characterized in that the connecting casing (24) has inlet openings and outlet openings for ventilation with clean air.

9. Holder according to one of the preceding claims, characterized in that a temperature sensor is provided in order to monitor the temperature of the electrode.

10. Holder according to one of the preceding claims, characterized in that the cooling tube (6) is releasably attached to the electrode holder (2), for example is screwed onto the coupling piece (7).

## Revendications

1. Support (2) pour une électrode plongeante refroidie (1) pour la fusion du verre, comprenant un raccord de couplage (7) pouvant être refroidi par un fluide de refroidissement et présentant un filetage extérieur (9) destiné à recevoir l'électrode (1) ainsi que des moyens de connexion pour la ligne d'alimentation électrique (16), et comprenant une bague d'appui (3) qui peut également être refroidie par un fluide de refroidissement et qui entoure l'électrode, caractérisé en ce que la bague d'appui (3) entoure l'électrode dans la partie où celle-ci est vissée sur le raccord de couplage (7), et en ce que la bague d'appui (3) est fabriquée d'un seul tenant dans un seul bloc de matériau, et en ce que la bague d'appui (3) est fixée de manière amovible sur le raccord de couplage (7) et/ou sur un boîtier de raccordement (24), lequel boîtier de raccordement (24) reçoit le raccord de couplage (7) et l'extrémité d'une ligne d'alimentation électrique qui est reliée au raccord de couplage (7).

2. Support selon la revendication 1, caractérisé en ce qu'il comporte un tube de fixation (29) destiné à fixer l'ensemble du support (2) sur un dispositif de réglage et de fixation, le tube de fixation (29) étant fixé sur le boîtier de raccordement (24).

3. Support selon la revendication 1 ou 2, caractérisé en ce que la bague d'appui (3) présente un logement pour l'électrode (1) conformé comme un cône intérieur (4).

4. Support selon l'une quelconque des revendications précédentes, caractérisé en ce que la ligne d'alimentation électrique est formée d'un câble électrique (15) refroidi par eau.

5. Support selon l'une quelconque des revendications précédentes, caractérisé en ce que la bague d'appui (3) présente un canal pour le fluide de refroidissement (18) et est incluse dans le circuit du fluide de refroidissement.

6. Support selon l'une quelconque des revendications précédentes, caractérisé en ce que le boîtier de raccord (24) est étanche aux gaz.

7. Support selon l'une quelconque des revendications 1 à 5, caractérisé en ce que le boîtier de raccordement (24) renferme de manière étanche aux gaz le raccord de couplage (7) et l'extrémité de la ligne d'alimentation électrique qui est reliée au raccord de couplage (7).

8. Support selon l'une quelconque des revendications 1 à 5, caractérisé en ce que le boîtier de raccordement (24) présente des ouvertures d'entrée et de sortie pour une ventilation avec de l'air pur.

9. Support selon l'une quelconque des revendications précédentes, caractérisé en ce qu'un capteur de température est prévu pour surveiller la température de l'électrode.

10. Support selon l'une quelconque des revendications précédentes, caractérisé en ce que le tube de refroidissement (6) est fixé de manière amovible au support d'électrode (2), par exemple par vissage sur le raccord de couplage (7).
